# DEMANDE DE BREVET EUROPEEN

(11) **EP 1 203 907 A1**
(43) Date de publication de la demande: **08.05.2002**
(21) Numéro de dépôt: 01402603.3
(22) Date de dépôt: 09.10.2001
(51) Int. Cl.: F16K 15/04, F16K 7/20

(54) **Bille de clapet**

(30) Priorité: 20.10.2000 FR 0013455
(71) Demandeur: VALOIS SA, 27110 Le Neubourg (FR)
(72) Inventeur: Ray, Dany, 78820 Juziers (FR)
(74) Mandataire: CAPRI SARL

(57) **Abrégé**

Bille de clapet (4) destinée à venir en contact étanche sur un siège de clapet (24) pour obturer sélectivement un passage de communication de fluide (23), caractérisé en ce que la bille (4) comprend un noyau sensiblement sphérique (40) et un revêtement (41) entourant ledit noyau, ledit revêtement (41) définissant une surface déformable (42) apte à se conformer à d'éventuelles imperfections de surface du siège de clapet (24).

## Description

La présente invention concerne une bille de clapet destinée à venir en contact étanche sur un siège de clapet de manière à obturer sélectivement un passage de communication de fluide. L'invention concerne également un distributeur comprenant une telle bille de clapet.

Il est courant d'utiliser une bille en tant qu'organe mobile de clapet pour obturer un passage de communication de fluide. La bille en reposant sur un siège adapté, par exemple de forme tronconique, permet de commander unidirectionnellement l'écoulement de fluide à travers le passage de communication. Il est de ce fait essentiel que la bille repose de manière étanche sur le siège de clapet tronconique.

De manière classique, la bille est réalisée en un matériau dur, par exemple de l'acier. D'autre part, le siège de clapet est souvent réalisé en matière plastique moulé. Il s'ensuit que si le siège de clapet n'est pas parfaitement en tronconique, c'est à dire s'il présente des irrégularités de surface, la bille ne repose pas de manière parfaitement étanche sur son siège. Etant donné que le siège de clapet est réalisé en matière plastique moulé, il est difficile d'assurer une qualité de surface parfaite, qui peut être affecté par des phénomènes de fluage plastique tel que la retassure.

La présente invention a pour but de remédier aux inconvénients précités de l'art antérieur en définissant une bille de clapet assurant une étanchéité parfaite sur son siège.

Le document DE 43 21 787 décrit une bille de clapet destinée à être intégrée au niveau d'un clapet d'entrée ou de sortie d'une pompe doseuse. Cette bille de clapet est réalisée en caoutchouc. Cependant, il n'est pas aisé techniquement de fabriquer des billes parfaitement sphériques en caoutchouc.

La présente invention propose une solution à cet inconvénient.

Pour ce faire, la présente invention propose une bille de clapet destinée à venir en contact étanche sur un siège de clapet pour obturer sélectivement un passage de communication de fluide, caractérisé en ce que la bille comprend un noyau sensiblement sphérique et un revêtement entourant ledit noyau, ledit revêtement définissant une surface déformable apte à se conformer à d'éventuelles imperfections de surface du siège de clapet.

Par surface externe déformable, il faut entendre une surface qui peut se conformer par déformation résiliente contre la surface du clapet. Après déformation, cette surface déformable revient à sa forme d'origine de préférence parfaitement sphérique. Il n'y a donc pas de déformation permanente, mais juste temporaire, le temps que la bille est plaquée sur le siège de clapet.

L'épaisseur du revêtement peut par exemple être de l'ordre du 1/10 du diamètre du noyau. En outre, il est avantageux que la densité relative de la bille soit au moins de l'ordre de 3 par rapport au fluide destiné à passer à travers le clapet.

Selon une forme de réalisation pratique, le noyau est en acier, le revêtement étant en Téflon™ ou en silicone. La bille se présente alors sous la forme d'une bille en acier enrobée avec un revêtement de Téflon™ ou de silicone. Le noyau en acier assure une bonne densité à la bille alors que le revêtement Téflon™ ou en silicone forme la surface souple déformable.

Il est également possible avec une telle bille de clapet de colorer la matière constitutive du revêtement de manière à obtenir une bille de couleur. Ceci n'est que très difficilement réalisable avec une bille classique en acier.

Il est également possible d'inclure ou d'appliquer un agent bactériostatique dans ou sur le revêtement de la bille.

Une telle bille de clapet peut trouver une application privilégiée dans un distributeur de produit fluide, telle qu'une pompe manuelle actionnable à l'aide d'un doigt. La bille peut par exemple servir d'élément de clapet mobile pour un clapet d'admission.

L'invention sera maintenant plus amplement décrite en référence aux dessins joints donnant à titre d'exemple non limitatif un mode de réalisation de l'invention.

Sur les dessins :
- la figure 1 est une vue en section verticale à travers un distributeur de produit fluide selon l'invention,
- la figure 2 est une vue schématique agrandie d'une bille de clapet selon l'invention en appui sur un siège de clapet tronconique.

La présente invention sera illustrée en référence à un distributeur de produit fluide qui est une pompe manuelle actionnable à l'aide d'un doigt. On aurait tout aussi bien pu utiliser d'autres dispositifs comprenant un clapet à bille. Il ne faut donc pas limiter la présente invention à un distributeur de produit fluide, puisqu'elle concerne plus généralement une bille de clapet, ce qui peut se trouver dans bon nombre de dispositifs.

La pompe ne sera pas décrite en détail, étant donné qu'elle n'est pas critique pour la présente invention.

On peut dire que la pompe utilisée pour illustrer la présente invention est d'un type quelque peu spécial avec un piston 1 et un piston différentiel 5 qui coulissent à l'intérieur d'un poussoir 6 qui comprend un orifice de distribution sous la forme d'un gicleur 7. Le piston 1 est défini par un corps 20 qui définit également un siège de clapet d'entrée 24 qui se poursuit vers le bas par un passage de communication 23. Le passage de communication 23, une fois la pompe montée sur un récipient de produit fluide, plonge à l'intérieur du récipient soit directement soit par une extension sous la forme d'un tube plongeur. Le piston 1 formé par le corps 20 coulisse contre une paroi 2 formée à l'intérieur du poussoir 6 de manière à former avec lui et le piston différentiel 5 une chambre de produit fluide 3 obturée sélectivement à son entrée par une bille 4 reposant sur le siège de clapet 24. Le piston différentiel 5 coulisse contre une autre paroi cylindrique 11 formée par le poussoir 6 et est sollicitée vers la bille 4 par un ressort 15 qui prend appui au niveau de la paroi supérieure du piston 6. En appuyant sur le poussoir 6, le piston 1 remonte sur la paroi 2, ce qui a pour effet de diminuer le volume de la chambre 3. Par réaction, le piston différentiel 5 se déplace vers le haut sur la paroi 11 à l'encontre du ressort 15 jusqu'à ce que le piston différentiel 5 dégage le conduit de sortie menant vers le gicleur 7.

Pendant toute la phase de mise sous pression du liquide à l'intérieur de la chambre 3, la bille 4 est plaquée sur son siège tronconique 24. On peut remarquer que le siège 24 présente une forme tronconique pour faciliter l'appui de la bille sphérique 4 de manière étanche. Il s'agit là d'une forme classique, mais d'autres formes peuvent être imaginées pour le siège de clapet.

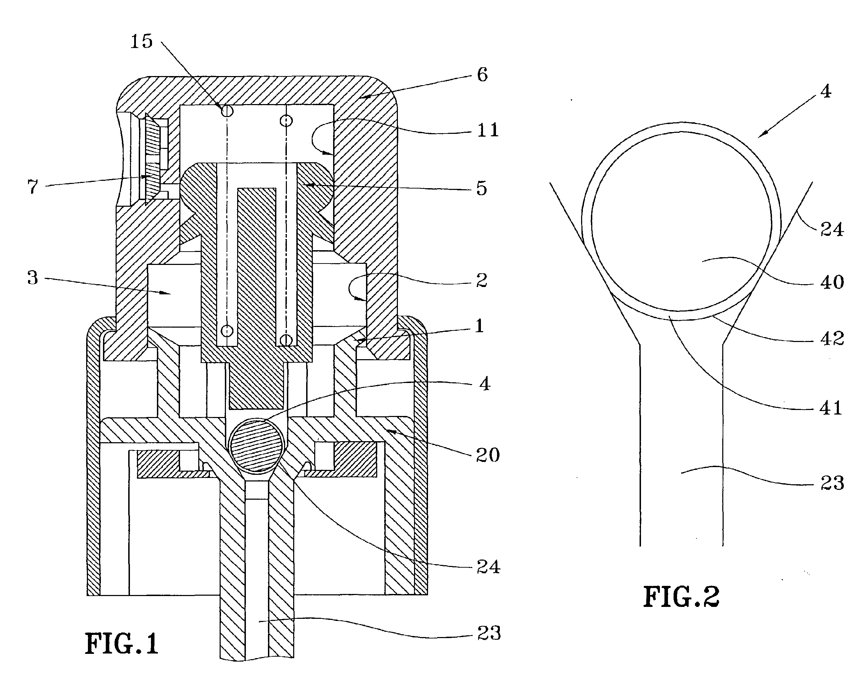

En se référant maintenant plus particulièrement à la figure 2 qui est une vue agrandie du clapet d'entrée de la figure 1, on peut voir que la surface extérieure 42 de la bille de clapet 4 est légèrement déformée au niveau de son contact sur le siège de clapet tronconique 24. En effet, selon l'invention, la surface externe de la bille de clapet est souple et déformable de manière à pouvoir se conformer à d'éventuelles irrégularités ou imperfections de surface du siège de clapet tronconique 24. Pour conférer cette caractéristique de déformation souple de la surface externe de la bille 4, il est nécessaire d'utiliser un matériau souple déformable. On peut par exemple utiliser du Téflon™ ou du silicone qui présentent de bonnes caractéristiques de déformabilité souple.

La bille de clapet peut entièrement être réalisée en un matériau déformable souple, mais de préférence, la bille peut être constituée d'un noyau sphérique dur 40 entouré par un revêtement souple déformable 41 qui définit la surface déformable 42. Le noyau peut par exemple être réalisé en acier. Le revêtement doit tout de même présenter une certaine épaisseur pour pouvoir se conformer par déformation aux éventuelles imperfections de surface du siège de clapet. Par conséquent, l'épaisseur du revêtement peut par exemple être de l'ordre du 1/10 du diamètre du noyau 40.

L'utilisation d'une bille en acier en tant que noyau 40 est particulièrement avantageux pour conférer à la bille de clapet une densité relative assez importante lui permettant de se plaquer facilement contre son siège tronconique 24. Pour assurer un bon positionnement rapide de la bille sur son siège, la densité relative de la bille doit au moins être de l'ordre de 3 par rapport au fluide destiné à passer à travers le clapet.

D'autre part, il est très facile de réaliser des billes de couleur en incluant simplement un colorant dans le revêtement de la bille. Il est également possible d'inclure un agent bactériostatique dans le revêtement ou de l'appliquer sur le revêtement.

Grâce à l'invention, il est possible de fabriquer des clapets dans lesquels les sièges n'ont pas besoin d'avoir une qualité de surface parfaite, puisque la surface externe souple déformable de la bille est apte à compenser ces éventuelles imperfections de surface.

## Revendications

1. Bille de clapet (4) destinée à venir en contact étanche sur un siège de clapet (24) pour obturer sélectivement un passage de communication de fluide (23), **caractérisé en ce que** la bille (4) comprend un noyau sensiblement sphérique (40) et un revêtement (41) entourant ledit noyau, ledit revêtement (41) définissant une surface déformable (42) apte à se conformer à d'éventuelles imperfections de surface du siège de clapet (24).

2. Bille de clapet selon la revendication 1, dans laquelle le revêtement (41) présente une épaisseur de l'ordre du dixième du diamètre du noyau (40).

3. Bille de clapet selon l'une quelconque des revendications précédentes, dans laquelle la densité relative de la bille est au moins de l'ordre de 3 par rapport au fluide destiné à passer à travers le clapet.

4. Bille de clapet selon l'une quelconque des revendications précédentes, dans laquelle le noyau (40) est en acier, le revêtement (41) étant en Téflon™ ou en silicone.

5. Bille de clapet selon la revendication 4, dans laquelle le revêtement (41) comprend un colorant.

6. Bille de clapet selon la revendication 4, dans laquelle le revêtement (41) comprend un agent bactériostatique.

7. Distributeur de produit fluide comprenant un clapet pourvu d'une bille selon l'une quelconque des revendications précédentes.

8. Distributeur selon la revendication 7, dans lequel le clapet est un clapet d'admission.

9. Distributeur selon la revendication 7 ou 8, dans lequel le distributeur est une pompe manuelle actionnable à l'aide d'un doigt.
